Europäisches Patentamt

European Patent Office

Office européen des brevets

(11) Numéro de publication: **0 227 544**
**A2**

## (12) DEMANDE DE BREVET EUROPEEN

(21) Numéro de dépôt: **86402794.1**

(22) Date de dépôt: **12.12.86**

(51) Int. Cl.⁴: **G 01 C 17/06**

(30) Priorité: **18.12.85 FR 8518785**

(43) Date de publication de la demande:
**01.07.87 Bulletin 87/27**

(84) Etats contractants désignés: **DE GB IT NL SE**

(71) Demandeur: **PLASTIMO**
**B.P. 162 15, rue Ingénieur Verrière**
**F-56104 Lorient Cédex (FR)**

(72) Inventeur: **Logeay, François**
**136, rue de la Corderie**
**F-79000 Niort (FR)**

(74) Mandataire: **Polus, Camille et al**
**c/o Cabinet Lavoix 2, Place d'Estienne d'Orves**
**F-75441 Paris Cedex 09 (FR)**

(54) Compas magnétique perfectionné.

(57) Ce compas comporte un équipage mobile (1) monté à rotation dans un boîtier (2) comportant un couvercle (3). et sur lequel sont disposés des moyens magnétiques (4) lui conférant une polarité magnétique Nord-Sud unique. Ce compas comporte également des moyens d'amortissement (5) de la rotation dudit équipage mobile (1) et des moyens de détection de la rotation de celui-ci. L'équipage mobile est monté à rotation dans le boîtier par l'intermédiaire de parties en saillie (6. 7) s'étendant de part et d'autre de l'équipage mobile (1), les extrémités desdites parties en saillie (6, 7) étant guidées en rotation dans des paliers d'extrémité (8, 9) solidaires l'un du couvercle (3) du boîtier et l'autre, du fond du boîtier (2).

FIG.1

EP 0 227 544 A2

**Description**

Compas magnétique perfectionné

La présente invention concerne un compas magnétique du type comportant un équipage mobile, monté à rotation dans un boîtier comportant un couvercle, et sur lequel sont disposés des moyens magnétiques lui conférant une polarité magnétique Nord-Sud unique. ledit compas comportant en outre, des moyens d'amortissement de la rotation dudit équipage mobile et des moyens de détection de la rotation de celui-ci.

On connait dans l'état de la technique, un certain nombre de compas magnétiques. Ainsi, par exemple, on connait un compas qui comprend une cuvette fermée par une vitre et suspendue à la cardan à l'intérieur par exemple d'un socle de bois. Cette cuvette est munie en son centre d'un pivot vertical terminé par une pointe, sur laquelle est posée une chape. Cette chape supporte une couronne mobile par exemple d'aluminium, sur laquelle est collée une rose des vents, et à laquelle sont suspendus par exemple par des fils de soie, des moyens magnétiques conférant à cet ensemble, une polarité magnétique Nord-Sud unique.

On connait également dans l'état de la technique, des compas dits "liquides" permettant d'amortir les oscillations de la rose dûes au roulis et aux embardées par exemple d'un navire sur lequel est disposé un tel compas.

Dans ce type de compas, les moyens magnétiques sont constitués par deux aimants fixés à un disque d'aluminium sur lequel est collée la rose des vents. Ce disque est muni de flotteurs et repose, par une chape, sur un pivot vertical placé au centre d'une cuvette. Cette cuvette est remplie d'un mélange par exemple d'eau et d'alcool, qui provoque un amortissement rapide des oscillations de la rose. Les flotteurs réduisent le poids apparent de l'ensemble afin de di minuer le frottement du disque sur le pivot.

Par ailleurs, il existe également plusieurs types de compas dits "électriques", permettant d'obtenir une information de cap magnétique terrestre. Les signaux délivrés par ces capteurs sont tous du type analogique, quel que soit le principe sur lequel ils sont basés.

Les principaux compas utilisés actuellement se divisent en deux groupes :
- à aimants permanents et indicateur mobile amorti par liquide; et
- sans aimant permanent ni pièces mobiles, du type " flux gate ".

Les compas magnétiques à aimants permanents et indicateur mobile amorti par liquide, sont issus des compas de marine à lecture visuelle classique et ne peuvent fournir des informations électriques linéaires fonction du cap, que sur des angles inférieurs à 350". Les compas qui utilisent des capteurs à effet Hall à base de semi-conducteurs, ou la variation de lumière traversant deux filtres polarisants disposés devant des photo-résistances. fonctionnent sur des angles inférieurs à 90°.

Par ailleurs, il existe également des compas donnant des informations d'angles supérieurs à 90°, mais dans tous les cas, ces compas présentent une zone d'incertitude pour les angles approchant 360°, qu'ils fonctionnent avec un potentiomètre optique ou avec une rose à transparence variable.

Un angle mort plus ou moins important empêche donc les compas de ce groupe de fonctionner sans recalage manuel sur une révolution complète.

Les compas sans aimant permanent ni pièces mobiles, du type " Flux Gate", exploitent le déphasage de signaux électriques sinusoïdaux circulant dans un ensemble de bobinages placés dans le champ magnétique terrestre. Ces compas permettent d'obtenir une lecture de cap sur 360°. Cependant, les signaux de sortie de ces compas étant analogiques, l'électronique de traitement de ces signaux est relativement importante, ce qui se traduit par un prix de revient relativement élevé de ces compas limitant l'utilisation de ceux-ci à des applications particulières.

Le but de l'invention est donc de résoudre les problèmes évoqués ci-dessus en proposant un compas magnétique qui soit simple, fiable, d'un prix de revient relativement faible, fonctionnant sur 360° et délivrant des informations de cap sous forme numérique, afin de les rendre exploitables facilement tant en logique câblée qu'en micro-informatique.

A cet effet, l'invention a pour objet un compas magnétique du type défini précédemment, caractérisé en ce que l'équipage mobile est monté à rotation dans le boîtier, par l'intermédiaire de parties en saillie s'étendant de part et d'autre de l'équipage mobile, les extrémités desdites parties en saillie étant guidées en rotation dans des paliers d'extrémité solidaires du boîtier, et en ce que les moyens d'amortissement de la rotation de l'équipage mobile sont constitués par un anneau de matériau conducteur de l'électricité, disposé sur le fond du boîtier, à proximité desdits moyens magnétiques.

Selon une autre caractéristique de l'invention, les moyens de détection de la rotation de l'équipage mobile sont constitués par un anneau opaque solidaire de l'équipage mobile, dans lequel sont ménagées des ouvertures équidistantes, et des moyens d'émission de lumière vers des moyens de réception à travers lesdites ouvertures de l'anneau opaque.

L'invention sera mieux comprise à l'aide de la description qui va suivre, donnée uniquement à titre d'exemple et faite en se référant aux dessins annexés sur lesquels :
- la Fig. 1 représente une vue en coupe d'un compas selon l'invention;
- la Fig. 2 représente une vue de dessus d'un couvercle de boîtier entrant dans la constitution d'un compas magnétique selon l'invention;
- la Fig. 3 représente une partie des moyens de détection de la rotation de l'équipage mobile, entrant dans la constitution d'un compas selon l'invention;
- la Fig. 4 représente un schéma synoptique de moyens de traitement des signaux de sortie des moyens de détection de la rotation de l'équipage mobile;

- la Fig. 5 représente un schéma de moyens de détection du sens de rotation de l'équipage mobile;

- la Fig. 6 illustre le fonctionnement de moyens de mise en forme des signaux de sortie des moyens de détection de la rotation de l'équipage mobile; et

- la Fig. 7 illustre le fonctionnement des moyens de détection du sens de rotation de l'équipage mobile du compas selon l'invention.

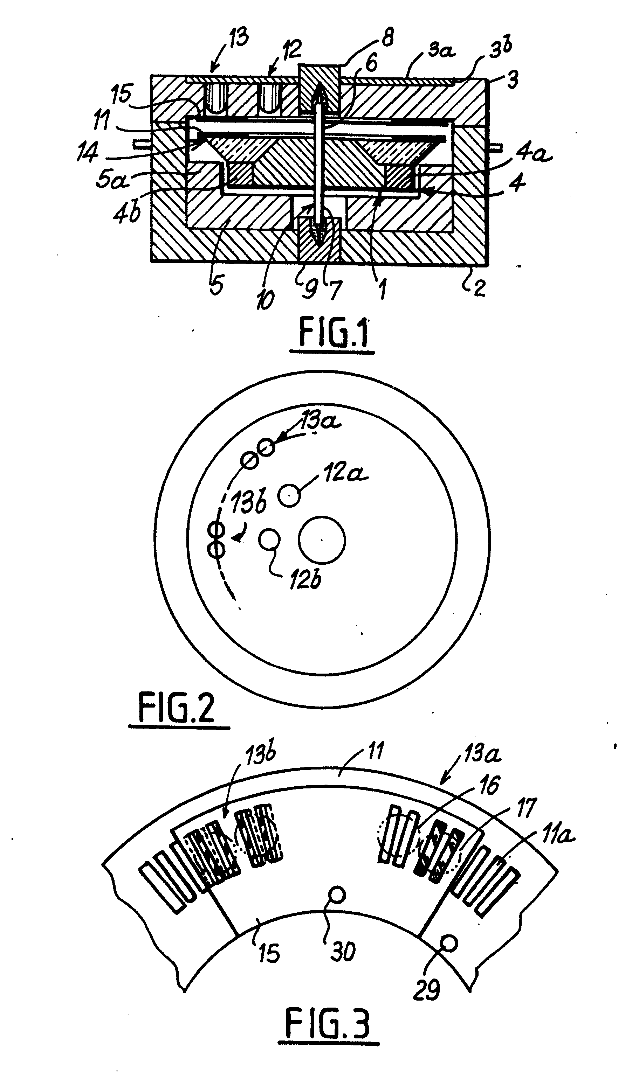

Comme on peut le voir sur la Figure 1, un compas magnétique selon l'invention comporte un équipage mobile 1 monté à rotation dans un boîtier 2 comportant un couvercle 3, le boîtier étant suspendu à la cardan de manière connue dans un support quelconque. Sur l'équipage mobile 1 sont disposés des moyens magnétiques 4 constitués par exemple par deux barreaux aimantés 4a,4b disposés parallèlement sur l'équipage mobile, et conférant à celui-ci une polarité magnétique Nord-Sud unique.

Le compas magnétique selon l'invention comporte également des moyens d'amortissement de la rotation dudit équipage mobile. Ces moyens d'amortissement sont constitués par exemple par un anneau 5 de matériau conducteur de l'électricité, disposé sur le fond du boîtier à proximité desdits moyens magnétiques 4. Cet anneau 5 comporte un rebord annulaire latéral 5a entourant les moyens magnétiques de l'équipage mobile.

Le fonctionnement de ces moyens d'amortissement sera décrit plus en détail par la suite.

L'équipage mobile 1 est monté à rotation dans le boîtier par l'intermédiaire de parties en saille 6, 7 s'étendant de part et d'autre de l'équipage mobile, les extrémités de ces parties en saillie étant guidées en rotation dans des paliers d'extrémité 8, 9 respectivement, solidaires du boîtier. Ces paliers d'extrémité sont constitués par exemple par des crapaudines.

Ainsi qu'on peut le voir sur cette Figure, l'un, 8, des paliers d'extrémité est solidaire du couvercle 3 du boîtier et l'autre, 9, du fond de celui-ci.

Avantageusement, lesdits parties en saillie 6 et 7 sont constituées par les extrémités d'une tige 10 formant arbre de rotation, traversant l'équipage mobile et débouchant de part et d'autre de celui-ci, cette tige étant solidaire de l'équipage mobile.

Le guidage de l'arbre de rotation de l'équi page mobile, à ses deux extrémités, rend le compas insensible aux changements de zones géographiques à composantes verticales de champ magnétique terrestre variables.

Le compas selon l'invention comporte également de moyens de détection de la rotation de l'équipage mobile 1 par rapport au boîtier. Ces moyens de détection sont constitués par un anneau opaque 11 solidaire de l'équipage mobile 1 et dans lequel sont ménagées des ouvertures équidistantes, comme on le verra plus en détail par la suite. Ces moyens de détection de la rotation de l'équipage mobile comportent également des moyens d'émission de lumière 12 destinés à émettre de la lumière vers des moyens de réception de lumière 13 à travers lesdites ouvertures de l'anneau 11.

Les moyens d'émission 12 et de réception 13 de lumière sont solidaires du couvercle 3 du boîtier et sont disposés dans des évidements ménagés à cet effet dans celui-ci. Ces moyens d'émission et de réception sont reliés par exemple à un circuit électronique de traitement qui sera décrit en détail par la suite, disposé sur une carte de circuit imprimé 3a, fixée sur le couvercle 3 du boîtier dans un logement 3b de celui-ci.

Par ailleurs, des moyens de réflexion de lumière, constitués par exemple par un anneau de réflexion 14, de section générale tronconique, dont les faces latérales font entre elles un angle d'environ 90°, sont solidaires de l'équipage mobile et sont disposés en regard des moyens d'émission et de réception de lumière. Ainsi, l'une des faces latérales de l'anneau 14 est disposée en regard des moyens d'émission 12 de lumière et l'autre face latérale de celui-ci, est disposée en regard des ouvertures de l'anneau opaque 11, de même que les moyens de réception 13 de lumière.

Ainsi, le faisceau lumineux émis par les moyens d'émission 12 de lumière, est réfléchi une première fois, par une première face latérale de l'anneau 14, vers une deuxième face de cet anneau, de sorte que le faisceau lumineux est réfléchi une seconde fois, vers les moyens de réception 13 de lumière, à travers les ouvertures de l'anneau opaque 11.

Les moyens d'amortissement de la rotation de l'équipage mobile sont basés sur les lois de l'électromagnétisme de LENZ et de FOUCAULT. Les variations de flux, engendrées par les mouvements des aimants solidaires de l'équipage mobile, lors du déplacement de celui-ci, créent dans le circuit électrique fermé, que constitue l'anneau 5, un courant électrique directement proportionnel à la vitesse de déplacement de l'équipage mobile, l'entrefer entre les aimants permanents et l'anneau 5 étant à peu près constant. Ce courant, induit par les lois de LENZ, engendre une contre-réaction bien connue de FOUCAULT sur l'équipage mobile, tendant à s'opposer au déplacement de celui-ci. Le mouvement de l'équipage mobile est d'autant plus amorti que sa vitesse de déplacement est grande.

Dans l'exemple de réalisation décrit, les moyens magnétiques sont constitués par des barreaux aimantés. Cependant, une amélioration de l'amortissement de la rotation de l'équipage mobile et de l'équilibrage de celui-ci peut être obtenue en utilisant un aimant torique à champ radial.

Comme on peut le voir sur la Fig.2, les moyens d'émission de lumière 12 sont en fait constitués par deux diodes électroluminescentes 12a, 12b et les moyens de réception de lumière sont constitués par deux paires 13a,13b de photo-transistors, disposés concentriquement sur le couvercle du boîtier.

Les extrémités des évidements, dans lesquels sont disposés les photo-transistors, en regard de l'anneau opaque de l'équipage mobile, sont obturées par des caches par exemple fixés sur la paroi intérieure du couvercle 3, en regard de l'équipage mobile. Ces caches peuvent par exemple être constitués par un anneau 15 (Figure 1) ou par une portion d'anneau, dans lequel est ménagé un certain nombre d'ouvertures identiques aux ouvertures de l'anneau opaque 11.

Cependant, comme on peut le voir sur la Figure 3, les ouvertures d'un cache d'un évidement d'un photo-transistor 16, sont décalées d'une distance correspondant à un nombre entier impair d'ouvertures, par rapport aux ouvertures du cache de l'évidement du photo-transistor 17 de la même paire 13a, de sorte que lorsque par exemple les ouvertures du cache de l'évidement du photo-transistor 16, sont en regard des ouvertures 11a de l'anneau opaque 11 de l'équipage mobile. les ouvertures du cache de l'évidement du phototransistor 17 sont en regard de parties pleines de cet anneau 11.

Les ouvertures des caches des évidements des photo-transistors de l'autre paire 13b, sont également décalées d'un nombre entier impair d'ouvertures. De plus, les ouvertures des caches des évidements des photo-transistors de cette paire 13b, sont décalées d'une distance correspondant à un nombre entier impair de demi-ouvertures par rapport à celles des caches des évidements des photo-transistors de la paire 13a.

Ainsi les photo-transistors de chaque paire reçoivent des signaux lumineux opposés permettant d'obtenir, comme on le verra par la suite, une commutation du circuit de traitement, au centre de l'une des ouvertures de l'anneau 11 de l'équipage mobile, quelles que soient les dérives d'éclairage ou de positionnement que l'on peut rencontrer sur la périphérie de cet anneau opaque 11.

Le décalage d'un nombre impair de demi-ouvertures, des ouvertures des caches des paires de photo-transistors, permet d'obtenir des signaux de sortie des paires de photo-transistors décalés entre eux, ce décalage permettant, comme on le verra par la suite, de déterminer le sens de rotation de l'anneau 11 et donc de l'équipage mobile par rapport au boîtier.

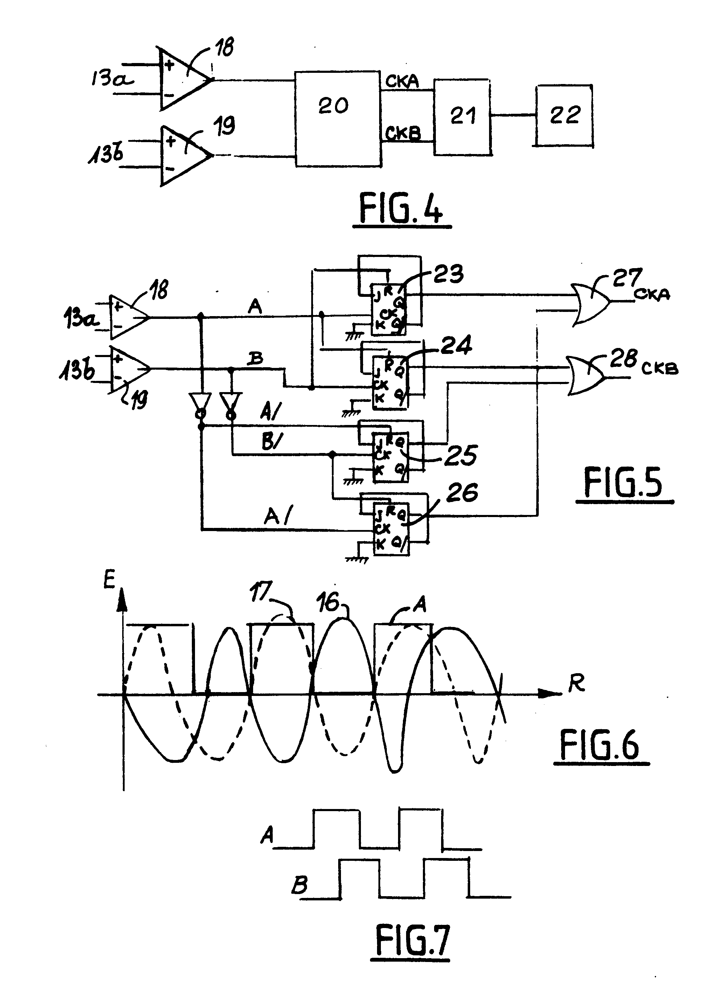

Comme on peut le voir sur la Figure 4, les sorties des photo-transistors de chaque paire 13a et 13b, sont reliées aux entrées de moyens de mise en forme de signaux 18 et 19 respectivement. Les sorties de ces moyens de mise en forme sont reliées à des moyens 20 de détection du sens de rotation de l'équipage mobile et les sorties de ces moyens de détection sont reliées à l'entrée de moyens de comptage/décomptage 21 de créneaux apparaissant sur les signaux provenant des photo-transistors, et correspondant chacun comme le verra par la suite, au passage d'une ouverture de l'anneau 11 de l'équipage mobile, devant l'une des paires de photo-transistors lors de la rotation de celui-ci, pour incrémenter ou décrémenter lesdits moyens de comptage/décomptage en fonction de la rotation de l'équipage mobile. La sortie des moyens 21 de comptage/décomptage est reliée par exemple à des moyens d'affichage 22.

Les moyens de mise en forme de signaux 18 et 19 sont avantageusement constitués par des amplificateurs différentiels. Les sorties des photo-transistors de chaque paire étant reliées respectivement à l'une ou à l'autre des entrées inverseuse ou non-inverseuse de l'amplificateur différentiel correspondant.

Comme on peut le voir sur la Figure 6, qui représente l'éclairement E des photo-transistors en fonction de la rotation R de l'équipage mobile, les photo-transistors 16 et 17 d'une première paire, reçoivent des signaux lumineux opposés. Le passage de ces signaux dans un amplificateur opérationnel différentiel permet d'obtenir un signal A à rapport cyclique égal à 1, dont les fronts de commutation se trouvent exactement au niveau des intersections des signaux de sortie des photo-transistors de chaque paire.

Les ouvertures des caches des évidements des photo-transistors de la seconde paire étant disposées de manière analogue, mais décalées par rapport à celles des caches des évidements de la première paire, on obtient donc un signal B analogue au signal A, mais qui est décalé par rapport à celui-ci. Comme on peut le voir sur la Figure 7, lorsqu'on fait tourner régulièrement l'anneau 11 et donc l'équipage mobile dans un certain sens, le signal A issu d'une paire de photo-transistors présente un front montant avant le signal B provenant de l'autre paire de photo-transistors.

Ce décalage entre l'apparition des fronts montants des signaux de sortie des paires de photo-transistors, est utilisé pour déterminer le sens de rotation de l'anneau par rapport au boîtier.

Les moyens de détection du sens de rotation de l'anneau 11 et donc de l'équipage mobile par rapport au boîtier, sont donc constitués par des moyens de détection de l'apparition d'un premier front montant sur les signaux provenant de l'une ou de l'autre des paires de photo-transistors.

Comme on peut le voir sur la Figure 5, ces moyens sont constitués par exemple par un circuit à bascules.

Ce circuit comporte par exemple quatre bascules référencées respectivement 23, 24, 25 et 26, la sortie Q/ de chacune de ces bascules étant rebouclée sur la borne J et la borne K étant reliée à la masse. La première bascule 23 reçoit sur son entrée CK, le signal A provenant d'une première paire de photo-transistors, par exemple 13a à travers l'amplificateur différentiel 18 et sur son entrée R le signal B provenant de l'autre paire de photo-transistors, par exemple 13b à travers l'amplificateur différentiel 19. La seconde bascule 24 reçoit sur son entrée R le signal A et sur son entrée CK le signal B. La bascule 25 reçoit sur son entrée R le signal inversé A/ et sur son entrée CK le signal inversé B/, tandis que la bascule 26 reçoit sur son entrée R le signal B/ et sur son entrée CK le signal A/. Les sorties Q des bascules 23 et 26 sont reliées aux entrées d'une porte OU 27 et les sorties Q des bascules 24 et 25 sont reliées aux entrées d'une porte OU 28. Les sorties CKA et CKB de ces portes 27 et 28 sont reliées par exemple aux entrées d'incrémentation et de décrémentation des moyens de comptage/décomptage 21 de créneaux apparaissant sur les signaux provenant des photo-transistors. Le circuit à bascules qui vient d'être décrit, fonctionnant de manière connue, détecte sur quel signal A ou B, apparaît le premier front montant et incrémente ou décrémente lesdits moyens de comptage/décomptage 21 en fonction de cette détection et du nombre de créneaux apparaissant sur les signaux et correspondant à une rotation de l'équipage mobile par rapport au boîtier.

Les ouvertures de l'anneau opaque 11 de l'équipage mobile peuvent par exemple être réalisées par découpe chimique pour l'obtention de quatre-vingt dix ouvertures permettant à l'aide du dispositif de traitement décrit, d'obtenir une résolution de 1".

L'anneau de réflexion 14 peut être constitué de matière plastique injectée du type ABS.

Par ailleurs, le compas décrit ne donne que des positions relatives du boîtier et donc du support sur lequel il est disposé. par rapport à l'équipage mobile. Cependant il peut également être envisagé de rajouter une voie d'initialisation en plus des deux voies de comptage/décomptage, permettant de transformer le compas décrit pour obtenir un compas délivrant des informations de cap absolu. Dans ce cas, le circuit électronique de traitement est informé du passage du support devant un point particulier de l'équipage mobile et peut ainsi calculer le nouveau cap en fonction de cette référence prise comme origine. Cette initialisation peut également se faire à l'aide d'un photo-transistor recevant de la lumière au moment de la coïncidence d'un trou 29 (Figure 3) ménagé dans l'anneau opaque 11 de l'équipage mobile et d'un trou 30 de l'anneau 15 . constituant le cache.

Les moyens de comptage/décomptage peuvent être constitués par exemple par un composant du type 74 LS 192 permettant d'obtenir le cap en degrés, exprimé par un nombre binaire, et recevant sur ses entrées d'incrémentation ou de décrémentation, des impulsions correspondant aux fronts montants des signaux CKA ou CKB de sortie des portes OU 27 et 28.

Cependant l'acquisition de ces signaux peut également se faire par micro-processeur, par exemple un INTEL 8031, programmé de manière à exclure les instabilités mécaniques von valables qui peuvent exister au cours d'une vibration autour d'un point de commutation, et pour aller tester l'état des voies A et B et en déduire s'il faut incrémenter ou décrémenter un compteur interne ou externe.

Par ailleurs, il est également possible, de programmer ce micro-processeur pour qu'il vienne lire à un rythme de par exemple 0,25 ms, les voies A et B, sans perdre de transitions, en raison de la lenteur relative du déplacement de l'équipage mobile par rapport au boîtier.

Ce compas trouve plus particulièrement son application dans les pilotes automatiques de bateau, le positionnement de bouées sonar sous-marines, les répétiteurs d'angle de prise de vue pour caméra, etc.

## Revendications

1 - Compas magnétique du type comportant un équipage mobile (1). monté à rotation dans un boîtier (2) comportant un couvercle (3). et sur lesquels sont disposés des moyens magnétiques (4) lui conférant une polarité magnétique Nord-Sud unique, ledit compas comportant en outre, des moyens d'amortissement de la rotation dudit équipage mobile (1) et des moyens de détection de la rotation de celui-ci. caractérisé en ce que l'équipage mobile est monté à rotation dans le boîtier. par l'intermédiaire de parties en saillie (6. 7) s'étendant de part et d'autre de l'équipage mobile. les extrémités desdites parties en saillie étant guidées en rotation dans des paliers d'extrémité (8, 9) solidaires du boîtier, et en ce que les moyens d'amortissement de la rotation de l'équipage mobile sont constitués par un anneau (5) de matériau conducteur de l'électricité, disposés sur le fond du boîtier (2), à proximité desdits moyens magnétiques (4).

2 - Compas magnétique selon la revendication 1, caractérisé en ce que l'un (9) des paliers d'extrémité est solidaire du fond du boîtier (2) et l'autre (8) du couvercle (3) de celui-ci.

3 - Compas magnétique selon l'une des revendications 1 ou 2, caractérisé en ce que lesdites parties en saillie (6, 7) sont constituées par les extrémités d'une tige (10) formant arbre de rotation, traversant l'équipage mobile (1) et débouchant de part et d'autre de celui-ci, ladite tige (10) étant solidaire de l'équipage mobile.

4 - Compas magnétique selon la revendication 1,2 ou 3, caractérisé en ce que ledit anneau (5) de matériau conducteur de l'électricité comporte un rebord annulaire latéral (5a) entourant les moyens magnétiques (4) de l'équipage mobile.

5 - Compas magnétique selon l'une quelconque des revendications précédentes, caractérisé en ce que les moyens de détection de la rotation de l'équipage mobile (1) sont constitués par un anneau opaque (11) solidaire de l'équipage mobile (1), dans lequel sont ménagées des ouvertures (11a) équidistantes, et des moyens d'émission (12) de lumière vers des moyens de réception (13) à travers lesdites ouvertures (11a) de l'anneau opaque (11).

6 - Compas magnétique selon la revendication 5. caractérisé en ce que les moyens d'émission (12) et les moyens de réception (13) de lumière sont solidaires du couvercle (3) du boîtier (2) et en ce qu'il est prévu des moyens de réflexion (14) de la lumière à travers lesdites ouvertures de l'anneau opaque (11), lesdits moyens de réflexion étant solidaires de l'équipage mobile.

7 - Compas magnétique selon la revendication 6, caractérisé en ce que les moyens de réflexion de lumière sont constitués par un anneau de réflexion (14) de section générale tronconique, dont les faces latérales font entre elles un angle d'environ 90°, l'une desdites faces latérales de l'anneau de réflexion étant disposée en regard des moyens d'émission (12) de lumière et l'autre, en regard des ouvertures (11a) de l'anneau opaque (11).

8 - Compas magnétique selon l'une quelconque des revendications 5 à 7, caractérisé en ce que les moyens de réception (13) de lumière sont disposés en regard des ouvertures (11a) de l'anneau opaque (11).

9 - Compas magnétique selon l'une quelconque des revendications 5 à 8, caractérisé en ce que les moyens d'émission de lumière sont constitués par deux diodes électroluminescentes (12a, 12b) disposées dans des évidements du couvercle (3) du boîtier et en ce que les moyens de réception de lumière sont constitués par deux paires de photo-transistors (13a, 13b) également disposés dans des évidements du couvercle du boîtier. les extrémités des évidements dans lesquels sont disposés les photo-transistors, en regard de l'anneau opaque (11) de l'équipage mobile (1), étant obturées par des caches (15) comportant des ouvertures identiques aux ouvertures de l'anneau opaque (11), les ouvertures du cache d'un évidement d'un photo-transistor (16) étant décalées d'une distance correspondant à un nombre entier impair d'ouvertures, par rapport aux ouvertures du cache de l'évidement du photo-transistor (17) de la même paire (13a), et les ouvertures des caches des évidements des photo-transistors d'une paire (13a), étant décalées d'une distance correspondant à un nombre entier impair de demi-ouvertures, par rapport à celles des caches des évidements des photo-transistors de l'autre paire (13b).

10 - Compas magnétique selon la revendication 9, caractérisé en ce que les sorties des photo-transistors de chaque paire (13a, 13b) sont reliées à des moyens (18, 19) de mise en forme de signaux.

11- Compas magnétique selon la revendication 10, caractérisé en ce que les moyens de mise en forme sont constitués par un amplificateur différentiel (18,19).

12 - Compas magnétique selon l'une des revendications 10 ou 11, caractérisé en ce que les sorties des moyens (18, 19) de mise en forme des signaux de sortie des photo-transistors sont reliées à des moyens de détection (20) du sens de rotation de l'équipage mobile (1) par rapport au boîtier.

13 - Compas magnétique selon la revendication 12, caractérisé en ce que les moyens de détection (20) du sens de rotation de l'équipage mobile sont constitués par des moyens de détection (23, 24, 25, 26, 27, 28) d'un premier front montant des signaux provenant de l'une ou de l'autre des paires de photo-transistors (13a, 13b).

14 - Compas magnétique selon la revendication 13, caractérisé en ce que les moyens de détection d'un premier front montant sont constitués par des bascules (23, 24, 25, 26).

15 - Compas magnétique selon l'une des revendications 13 ou 14, caractérisé en ce que les sorties des moyens de détection de l'apparition d'un premier front montant sont reliées à des moyens de comptage/décomptage (21) de créneaux apparaissant sur les signaux provenant des photo-transistors et correspondant chacun au passage d'une ouverture (11a) de l'anneau opaque (11) de l'équipage mobile (1) devant l'une des paires (13a, 13b) de photo-transistors, lors de la rotation de celui-ci, pour incrémenter ou décrémenter lesdits moyens de comptage/décomptage (21), en fonction de la rotation de l'équipage mobile par rapport au boîtier.

16 - Compas magnétique selon l'une quelconque des revendications précédentes, caractérisé en ce que les moyens magnétiques (4) sont constitués par deux barreaux aimantés (4a,4b) disposés parallèlement sur l'équipage mobile.

17 - Compas magnétique selon l'une quelconque des revendications 1 à 15, caractérisé en ce que les moyens magnétiques sont constitués par un aimant torique à champ radial.

FIG.1

FIG.2

FIG.3

**FIG.4**

**FIG.5**

**FIG.6**

**FIG.7**